# EUROPEAN PATENT SPECIFICATION

(11) **EP 2 208 929 B1**
(45) Date of publication and mention of the grant of the patent: **11.02.2015**
(21) Application number: 09015900.5
(22) Date of filing: 22.12.2009
(51) Int. Cl.: F23L 15/02, C03B 5/237

(54) **Combustion control method for regenerative-combustion heating furnace**
Verbrennungsverfahren für einen regenerativen Verbrennungsofen
Procédé de combustion pour un four à régénération

(30) Priority: 16.01.2009 JP 2009007447
(43) Date of publication of application: 21.07.2010
(73) Proprietor: Chugai Ro Co., Ltd., Chuo-ku Osaka-shi, Osaka (JP)
(72) Inventor: Kimoto, Yasuyuki, Osaka-shi, Osaka (JP); Ueshima, Hirotoshi, Osaka-shi, Osaka (JP); Jikumaru, Shuuichi, Tokyo (JP); Mashiko, Satoru, Tokyo (JP); Agario, Hidetaka, Tokyo (JP)
(74) Representative: Glawe, Delfs, Moll

(56) References cited:
- EP-A2- 0 136 175
- JP-A- 7 103 668
- US-A- 5 823 769

## Description

### [Technical Field]

The present invention relates to a combustion control method for regenerative-combustion heating furnace in which a heating furnace is provided with at least a pair of regenerative burners each including a burner portion equipped with a fuel injection nozzle and a regenerator accommodating a heat storage material therein and in which the paired regenerative burners are switched to alternate between operations in a manner such that one regenerative burner of the pair performs a combusting operation by introducing a combustion air to the burner portion via the regenerator and injecting a fuel gas from the fuel injection nozzle of this burner portion while the other regenerative burner performs an operation of introducing a combustion exhaust gas into the regenerator and allowing the heat storage material to store heat from the combustion exhaust gas before discharging the combustion exhaust gas. Particularly, the invention is characterized by preventing the following problem encountered by the above regenerative-combustion heating furnace. In a case where the combusting and heat storing operations of the pair of regenerative burners are stopped, the regenerative burner which is performing, at the time of operation stop, the operation of introducing the combustion exhaust gas into the regenerator and allowing the heat storage material to store the heat from the combustion exhaust gas before discharging the combustion exhaust gas may suffer corrosion at the regenerator or an exhaust gas discharge pipe and the like for discharging the combustion exhaust gas.

### [Background Art]

The regenerative-combustion heating furnace has heretofore been used for heat treating the subject material. The regenerative-combustion heating furnace is provided with at least a pair of regenerative burners each including the burner portion equipped with the fuel injection nozzle and the regenerator accommodating the heat storage material therein. The pair of regenerative burners alternates between the operations in a manner such that one regenerative burner of the pair performs the combusting operation by introducing the combustion air to the burner portion via the regenerator and injecting the fuel gas from the fuel injection nozzle of this burner portion while the other regenerative burner performs the operation of introducing the combustion exhaust gas into the regenerator accommodating the heat storage material and allowing the heat storage material to store the heat from the combustion exhaust gas before discharging the combustion exhaust gas.

It is noted here that such a regenerative-combustion heating furnace has the following problem. In the case where both the combusting and heat storing operations of the pair of regenerative burners are stopped, the regenerative burner which is performing, at the time of operation stop, the operation of introducing the combustion exhaust gas into the regenerator and allowing the heat storage material to store the heat from the combustion exhaust gas before discharging the combustion exhaust gas is placed in a state where the combustion exhaust gas remains in the regenerator or the exhaust gas discharge pipe and the like for discharging the combustion exhaust gas. If this stop time is prolonged, the combustion exhaust gas in the regenerator or the exhaust gas discharge pipe and the like is gradually cooled to condense into acid, which corrodes the inside of the regenerator or the exhaust gas discharge pipe and the like.

In cases, a regenerative-combustion heating furnace provided with plural pairs of the above-described regenerative burners may be required to change a combustion load therein beyond a combustion limit for a regenerative burner pair depending upon the type or size of the subject material or upon the purpose of treatment.

Therefore, as disclosed in Japanese Unexamined Patent Publication No.H8-35623 and Japanese Patent Publication No.3562142, a combustion control method has heretofore been proposed wherein the plural pairs of regenerative burners in the heating furnace are controlled to perform thinned-out combustion by properly stopping the combusting and heat storing operations of the paired regenerative burners according to the combustion load in the heating furnace.

However, in the case where the plural pairs of regenerative burners are controlled by properly stopping the combusting and heat storing operations of the paired regenerative burners, the same problem as the above is encountered by a pair of regenerative burners the combusting and heat storing operations of which are stopped for a long time. That is, the acid produced by condensation of the cooled combustion exhaust gas causes corrosion of the inside of the regenerator or the exhaust gas discharge pipe and the like in the regenerative burner which is performing, at the time of operation stop, the operation of introducing the combustion exhaust gas into the regenerator and allowing the heat storage material to store the heat from the combustion exhaust gas before discharging the combustion exhaust gas.

JP 7-103668 A discloses a combustion control method according to the preamble of claim 1.

EP 0 136 175 A2 is directed to a thermal regenerator system.

### [Disclosure of the Invention]

### [Problem to Be Solved by the Invention]

The invention addresses the above-described problem encountered by the regenerative-combustion heating furnace which is provided with at least a pair of regenerative burners each including the burner portion equipped with the fuel injection nozzle and the regenerator accommodating the heat storage material therein and in which the paired regenerative burners are switched to alternate between the operations in a manner such that one regenerative burner of the pair performs the combusting operation by introducing the combustion air to the burner portion via the regenerator and injecting the fuel gas from the fuel injection nozzle of this burner portion while the other regenerative burner performs the operation of introducing the combustion exhaust gas into the regenerator and allowing the heat storage material to store the heat from the combustion exhaust gas before discharging the combustion exhaust gas.

In the above-described regenerative-combustion heating furnace, the invention seeks to prevent the corrosion at the regenerator or the exhaust gas discharge pipe and the like for discharging the combustion exhaust gas in the case where the combusting and heat storing operations of the paired regenerative burners are stopped. The corrosion may occur in the regenerative burner performing the operation of introducing the combustion exhaust gas into the regenerator and allowing the heat storage material to store the heat from the combustion exhaust gas before discharging the combustion exhaust gas from suffering.

### [Means for Solving the Problems]

In accordance with the invention, the above object is accomplished in a combustion control method according to claim 1.

It is further preferred that the combustion air is temporarily supplied to the regenerative burner which is performing, at the time of operation stop, the operation of introducing the combustion exhaust gas into the regenerator and allowing the heat storage material to store the heat from the combustion exhaust gas before discharging the combustion exhaust gas. When this operation is performed, it is preferred to perform the combusting operation by temporarily injecting the fuel gas from the fuel injection nozzle at the burner portion of this regenerative burner.

It is also possible to carry out the same operation as the above in the other regenerative burner which is performing, at the time of operation stop, the combusting operation by introducing the combustion air to the burner portion via the regenerator and injecting the fuel gas from the fuel injection nozzle of this burner portion.

In a case where the combusting and heat storing operations of the respective pairs of regenerative burners are selectively stopped in the regenerative-combustion heating furnace provided with plural pairs of the above-described regenerative burners, as well, it is also possible that the combustion air is temporarily supplied to the regenerative burner which is performing, at the time of operation stop, the operation of introducing the combustion exhaust gas into the regenerator and allowing the heat storage material to store the heat from the combustion exhaust gas before discharging the combustion exhaust gas while the combusting operation is performed by temporarily injecting the fuel gas from the fuel injection nozzle at the burner portion of this regenerative burner.

### [Advantageous Effects of the Invention]

In the combustion control method for regenerative-combustion heating furnace according to the invention, the arrangement is made such that in conjunction with stopping the combusting and heat storing operations of the paired regenerative burners as described above, the combustion air is temporarily supplied to the regenerative burner which is performing, at the time of operation stop, the operation of introducing the combustion exhaust gas into the regenerator and allowing the heat storage material to store the heat from the combustion exhaust gas before discharging the combustion exhaust gas. Therefore, the combustion exhaust gas remaining in the regenerator of this regenerative burner or the exhaust gas discharge pipe and the like for discharging the combustion exhaust gas is moved by the combustion air thus supplied so as to be discharged from the regenerator or the exhaust gas discharge pipe and the like into the heating furnace.

As a result, the production of acid from the cooled combustion exhaust gas remaining in the regenerator or the exhaust gas discharge pipe and the like does not occur in the regenerative burner which is performing, at the time of operation stop, the operation of introducing the combustion exhaust gas into the regenerator and allowing the heat storage material to store the heat from the combustion exhaust gas before discharging the combustion exhaust gas, in the case where the combusting and heat storing operations of the paired regenerative burners are stopped, as described above. Even in the case of prolongation of the time in which the combusting and heat storing operations of the paired regenerative burners are stopped, the regenerator or the exhaust gas discharge pipe and the like do not suffer the inside corrosion.

If the arrangement is made, as described above, such that the combustion air is temporarily supplied to the regenerative burner which is performing, at the time of operation stop, the operation of introducing the combustion exhaust gas into the regenerator and allowing the heat storage material to store the heat from the combustion exhaust gas before discharging the combustion exhaust gas and that the combusting operation is performed by temporarily injecting the fuel gas from the fuel injection nozzle at the burner portion of this regenerative burner, oxygen partial pressure in the heating furnace is prevented from being increased by the temporarily supplied combustion air. This ensures that a stable heat treatment is carried out.

The arrangement is made such that the combustion air is temporarily supplied to the regenerative burner which is performing, at the time of operation stop, the operation of introducing the combustion exhaust gas into the regenerator and allowing the heat storage material to store the heat from the combustion exhaust gas before discharging the combustion exhaust gas and that the combustion air is introduced to the exhaust gas discharge pipe for discharging the combustion exhaust gas, the combustion exhaust gas remaining in the exhaust gas discharge pipe is assuredly discharged. Hence, the exhaust gas discharge pipe is more reliably prevented from suffering the inside corrosion caused by the combustion exhaust gas.

If the regenerative burner which is performing, at the time of operation stop, the combusting operation by introducing the combustion air to the burner portion via the regenerator and injecting the fuel gas from the fuel injection nozzle of this burner portion is also arranged such that the combustion air is temporarily supplied and is introduced to the exhaust gas discharge pipe for discharging the combustion exhaust gas, the combustion exhaust gas remaining in the exhaust gas discharge pipe is assuredly discharged. Hence, the exhaust gas discharge pipe is more reliably prevented from suffering the inside corrosion caused by the combustion exhaust gas.

These and other objects, advantages and features of the invention will become apparent from the following description thereof taken in conjunction with the accompanying drawings.

### [Brief Description of the Drawings]

[Fig.1] Fig.1 is a schematic sectional view showing an internal arrangement of a heating furnace practicing a combustion control method for regenerative-combustion heating furnace according to one embodiment of the invention;
[Fig.2] Fig. 2 is a schematic plan view of the above heating furnace according to the above embodiment;
[Fig.3] Fig.3 is a schematic diagram illustrating how combusting and heat storing operations are performed by a pair of regenerative burners in the above heating furnace according to the above embodiment;

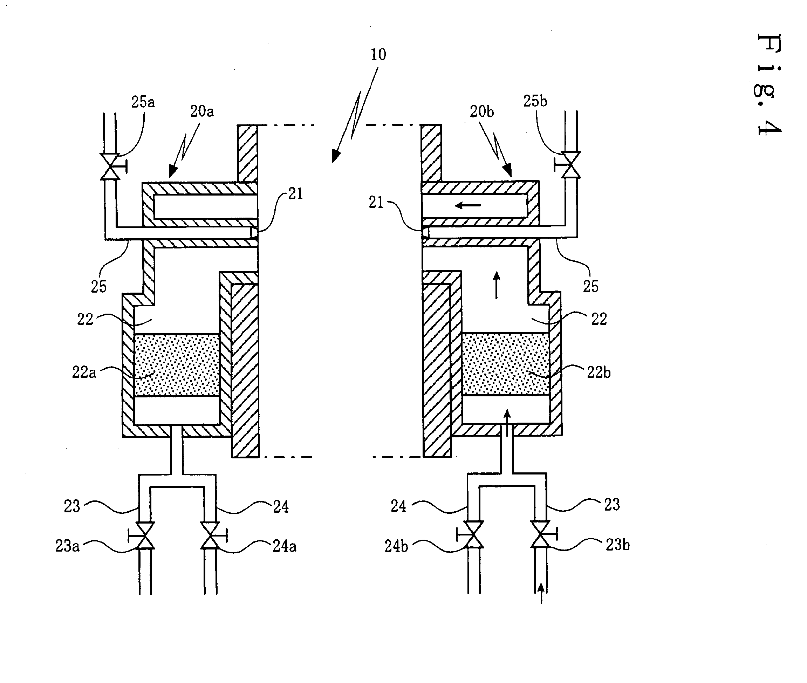

[Fig.4] Fig.4 is a schematic diagram illustrating how a combustion air is temporarily supplied with closed gas discharging valve in the regenerative burner which is introducing a combustion exhaust gas into a regenerator for allowing a heat storage material to store heat from the combustion exhaust gas and discharging the combustion exhaust gas through an exhaust gas discharge pipe when the combustion in a pair of regenerative burners is stopped by stopping the combusting and heat storing operations of the paired regenerative burners in the above heating furnace according to the above embodiment;
[Fig.5] Fig.5 is a schematic diagram illustrating how a fuel gas is temporarily combusted by temporarily injecting the fuel gas from the fuel injection nozzle of the above regenerative burner in the state shown in Fig.4 and according to the above embodiment; and
[Fig.6] Fig.6 is a schematic diagram illustrating how the combustion air is temporarily supplied with opened gas discharging valve in each regenerative burner when the combustion in a pair of regenerative burners is controlled by stopping the combusting and heat storing operations of the paired regenerative burners in the above heating furnace according to the above embodiment.

### [Best Mode for Carrying Out the Invention]

A combustion control method for regenerative-combustion heating furnace according to an embodiment of the invention will be specifically described as below with reference to the accompanying drawings. It is to be noted that the combustion control method for regenerative-combustion heating furnace according to the invention is not particularly limited to the embodiment disclosed hereinbelow but may be embodied in any other suitable forms without departing from the spirit or essential characteristics thereof.

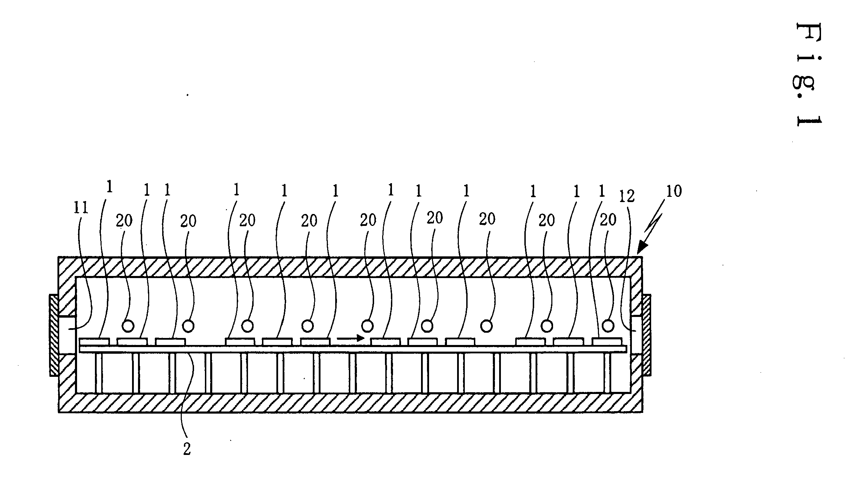

According to the embodiment, as shown in Fig.1, a subject material 1 formed of a steel material is introduced into a heating furnace 10 through an inlet 11 of the heating furnace 10. The subject material is heat treated while being transported by a walking beam 2 through the heating furnace 10. The subject material 1 thus heat treated is taken out of the heating furnace 10 through an outlet 12 of the heating furnace 10.

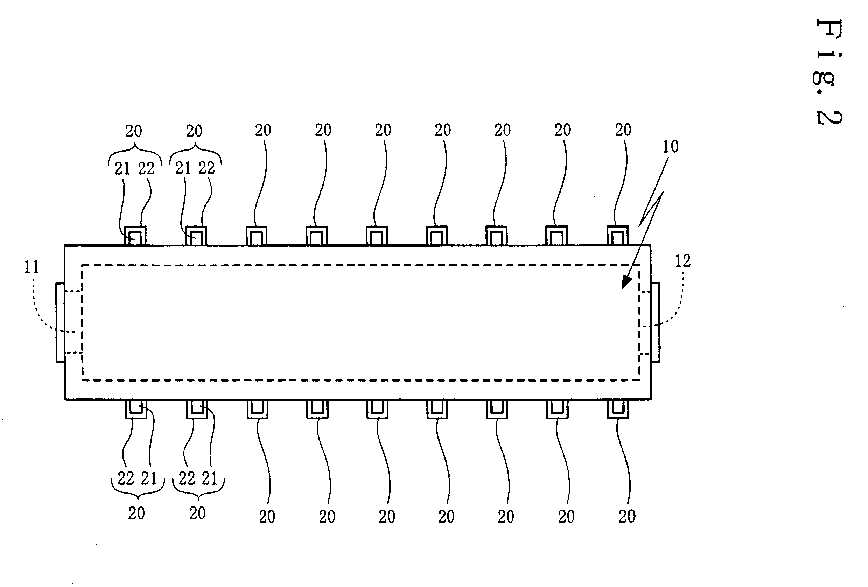

According to the embodiment, as shown in Fig.2, the heating furnace 10 is provided with plural pairs of regenerative burners 20 arranged in a moving direction of the subject material 1. The paired regenerative burners 20 are disposed in face-to-face relation. The regenerative burner 20 includes a burner portion 21 and a regenerator 22.

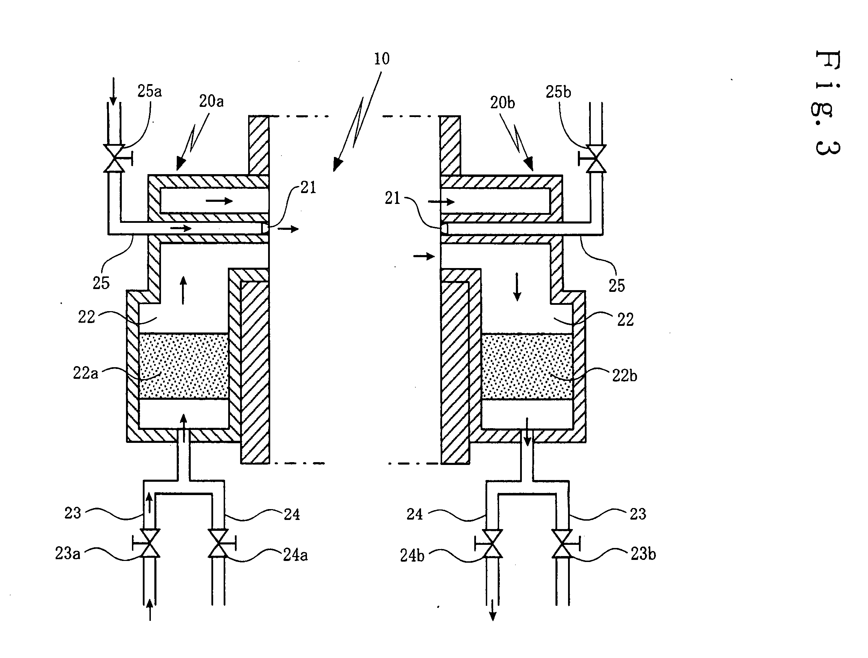

In the pair of regenerative burners 20, operations are performed as follows. As shown in Fig.3, one regenerative burner 20a of the pair opens an air feeding valve 23a which is disposed in an air feed pipe 23 for feeding a combustion air to the regenerator 22 accommodating a heat storage material 22a therein. In the meantime, a gas discharging valve 24a is closed, which valve is disposed in an exhaust gas discharge pipe 24 for discharging a combustion exhaust gas via the regenerator 22. The combustion air introduced into the regenerator 22 through the air feed pipe 23 is heated by means of the heat storage material 22a accommodated in this regenerator 22. The combustion air thus heated is fed to the burner portion 21 while a fuel gas is injected from a fuel injection nozzle 25 by opening a gas feeding valve 25a for feeding the fuel gas to the fuel injection nozzle 25 disposed at this burner portion 21. Thus, the fuel gas is combusted in the heating furnace 10

In the other regenerative burner 20b, on the other hand, the combusting operation is disabled by closing a gas feeding valve 25b for feeding the fuel gas to the fuel injection nozzle 25 and closing an air feeding valve 23b disposed in the air feed pipe 23. In the meantime, a gas discharging valve 24b disposed in the exhaust gas discharge pipe 24 is opened, the exhaust gas discharge pipe serving to discharge the combustion exhaust gas via the regenerator 22. The combustion exhaust gas resulting from the combustion in the heating furnace 10 is sucked into the regenerator 22 so as to allow the heat storage material 22a accommodated in the regenerator 22 to store heat from the combustion exhaust gas. Subsequently, the combustion exhaust gas is discharged to the outside via the exhaust gas discharge pipe 24.

In each pair of regenerative burners 20 described above, the one regenerative burner 20a performs the combusting operation by injecting the fuel gas from the fuel injection nozzle 25 while the other regenerative burner 20b introduces the combustion exhaust gas into the regenerator 22 and allows the heat storage material 22b to store the heat from the combustion exhaust gas before discharging the combustion exhaust gas. These regenerative burners are switched to alternate between these operations.

Next, description is made on a case where combustion load in the above heating furnace 10 is reduced because the type, size or the like of the subject material 1 to be heat treated is changed and where the combusting and heat storing operations of the paired regenerative burners are stopped as described above.

According to the embodiment, as shown in Fig.4, in the one regenerative burner 20a performing the combusting operation by injecting the fuel gas from the fuel injection nozzle 25 as described above, the combusting operation is stopped by closing the air feeding valve 23a and the gas feeding valve 25a so as to inhibit the supply of combustion air and fuel gas.

On the other hand, in the other regenerative burner 20b introducing the combustion exhaust gas into the regenerator 22 for allowing the heat storage material 22b to store the heat from the combustion exhaust gas and discharging the combustion exhaust gas through the exhaust gas discharge pipe 24, the gas discharging valve 24b is closed while the air feeding valve 23b is temporarily opened for temporary supply of the combustion air through the air feed pipe 23. The combustion exhaust gas remaining in the regenerator 22 or the exhaust gas discharge pipe 24 and the like is discharged into the heating furnace 10 by means of the combustion air thus supplied.

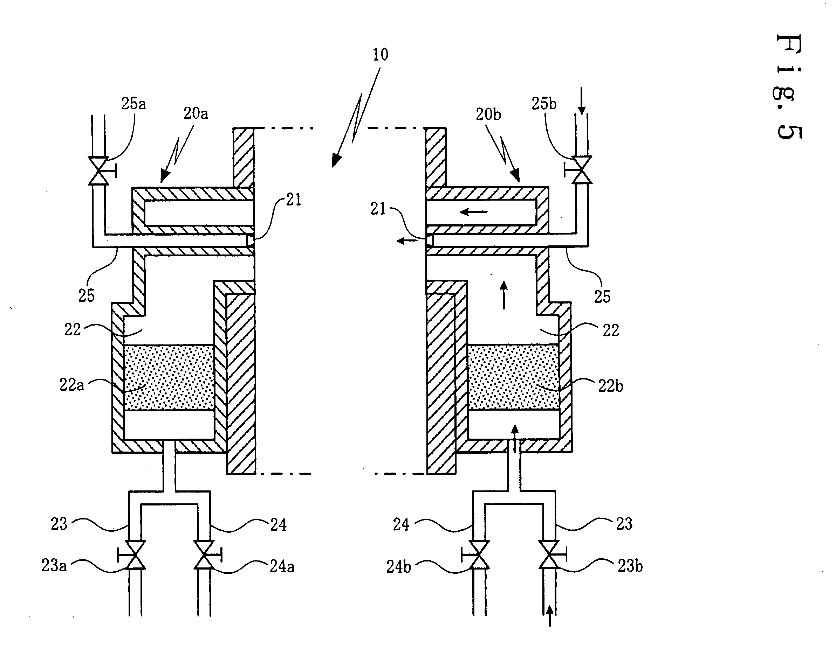

As shown in Fig.5, the above gas feeding valve 25b is temporarily opened for temporary injection of the fuel gas from this fuel injection nozzle 25 so that the fuel gas and the combustion air supplied as described above are temporarily combusted.

After temporarily combusting the fuel gas and combustion air in this manner, the regenerative burner 20b stops the combusting operation by closing the air feeding valve 23b and the gas feeding valve 25b so as to inhibit the supply of the combustion air and fuel gas.

This approach prevents the acid production from the cooled combustion exhaust gas, which remains in the regenerator 22, the exhaust gas discharge pipe 24 and the like of the regenerative burner 20b which is performing, at the time of operation stop, the operation of introducing the combustion exhaust gas into the regenerator 22 and allowing the heat storage material 22b to store the heat from the combustion exhaust gas before discharging the combustion exhaust gas, as described above. Thus is eliminated the problem that the inside of the regenerator 22, the exhaust gas discharge pipe 24 and the like is corroded with the acid. Furthermore, the combustion air temporarily supplied is combusted together with the fuel gas, as described above, whereby the increase in oxygen partial pressure in the heating furnace 10 is prevented to ensure that the stable heat treatment is carried out.

The time in which the combustion air is temporarily supplied to the regenerative burner 20b which is performing, at the time of operation stop, the operation of introducing the combustion exhaust gas into the regenerator 22 and allowing the heat storage material 22b to store the heat from the combustion exhaust gas before discharging the combustion exhaust gas is preferably defined to be long enough to flow a sufficient amount of combustion air for discharging the remaining combustion exhaust gas from the regenerator 22 into the heating furnace 10. The above time is preferably defined to be long enough to flow the combustion air at least in a volume given by subtracting the volume of the heat storage material 22b from the volume of the regenerator 22.

In the case where the regenerative burner 20b temporarily injects the fuel gas from the fuel injection nozzle 25 and temporarily combusts the fuel gas together with the combustion air supplied thereto as described above, it is preferred that the fuel gas and the combustion air are supplied simultaneously. In addition, it is more preferred to maintain flow rates of the fuel gas and the combustion air at levels just prior to the operation stop.

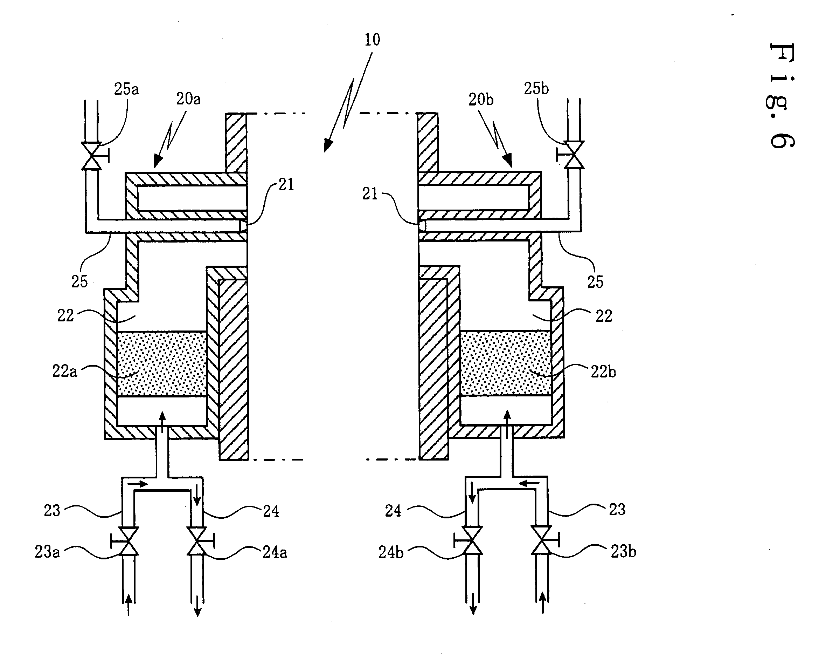

The combustion air is temporarily supplied, as described above, to the regenerative burner 20b which is performing, at the time of operation stop, the operation of introducing the combustion exhaust gas into the regenerator 22 and allowing the heat storage material 22b to store the heat from the combustion exhaust gas before discharging the combustion exhaust gas, so that the combustion exhaust gas remaining in the regenerator 22, the exhaust gas discharge pipe 24 and the like is discharged into the heating furnace 10 by way of the combustion air. As shown in Fig.6, it is preferred in this process that the air feeding valve 23b is temporarily opened for temporary supply of the combustion air through the air feed pipe 23 while the gas discharging valve 24b is opened to allow the temporarily supplied combustion air to discharge the remaining combustion exhaust gas from the exhaust gas discharge pipe 24 to the outside of the furnace via the exhaust gas discharge pipe 24. This approach ensures that the combustion exhaust gas remaining in the gas discharge pipe 24 is more reliably discharged.

It is preferred that the regenerative burner 20a performing, at the time of operation stop, the combusting operation by injecting the fuel gas from the fuel injection nozzle 25 also takes the same procedure as the regenerative burner 20b in order that the combustion exhaust gas remaining in the exhaust gas discharge pipe 24 is more reliably discharged. In the regenerative burner 20a, as shown in Fig.6, the air feeding valve 23a is temporarily opened for temporary supply of the combustion air through the air feed pipe 23 while the gas discharging valve 24a is opened to allow the temporarily supplied combustion air to discharge the remaining combustion exhaust gas from the exhaust gas discharge pipe 24 to the outside of the furnace via the exhaust gas discharge pipe 24. It is preferred in this case that the time in which the combustion air is temporarily supplied is defined to be long enough to flow a sufficient amount of combustion air for diluting the combustion exhaust gas in the exhaust gas discharge pipe 24 to such a degree as to eliminate the fear that the acid causing the corrosion at the inside of the exhaust gas discharge pipe 24 is produced from the combustion exhaust gas.

### [Reference Characters List]

1: Subject material
2: Transport roller
10: Heating furnace
11: Inlet
12: Outlet
20, 20a, 20b: Regenerative burner
21: Burner portion
22: Regenerator
22a, 22b: Heat storage material
23: Air feed pipe
23a, 23b: Air feeding valve
24: Exhaust gas discharge pipe
24a, 24b: Gas discharging valve
25: Fuel injection nozzle
25a, 25b: Gas feeding valve

## Claims

1. A combustion control method for a regenerative-combustion heating furnace in which a heating furnace (10) is provided with at least a pair of regenerative burners (20a, 20b) each including a burner portion (21) equipped with a fuel injection nozzle (25) and a regenerator (22) accomodating a heat storage material (22a, 22b) therein and in which the paired regenerative burners (20a, 20b) are switched to alternate between operations in a manner such that one regenerative burner of the pair performs a combusting operation by introducing a combustion air to the burner portion via the regenerator and injecting a fuel gas from the fuel injection nozzle (25) of this burner portion while the other regenerative burner performs an operation of introducing a combustion exhaust gas into the regenerator (22) and allowing the heat storage material to store heat from the combustion exhaust gas before discharging the combustion exhaust gas through an exhaust gas discharge pipe (24),
wherein in conjunction with stopping the combusting and heat storing operations in the paired regenerative burners, combustion air is temporarily supplied to the regenerative burner which is performing, at the time of operation stop, the operation of introducing the combustion exhaust gas into the regenerator and allowing the heat storage material to store the heat from the combustion exhaust gas before discharging the combustion exhaust gas, whereby exhaust gas remaining in the regenerator (22) is discharged into the furnace (10),
**characterized in that**
combustion air is introduced, at the time of operation stop, to said exhaust gas discharge pipe (24) whereby exhaust gas remaining in the discharge pipe (24) is discharged to the outside of the furnace (10).

2. The combustion control method for regenerative-combustion heating furnace according to Claim 1, wherein the combustion air is temporarily supplied to the regenerative burner (20a-20b) which is performing, at the time of operation stop, the operation of introducing the combustion exhaust gas into the regenerator (22) and allowing the heat storage material to store the heat from the combustion exhaust gas before discharging the combustion exhaust gas and wherein the combusting operation is performed by temporarily injecting the fuel gas from the burner portion of this regenerative burner (20a,20b).

3. The combustion control method for regenerative-combustion heating furnace according to Claim 1, wherein the combustion air is also temporarily supplied to the regenerative burner (20a,20b) which is performing, at the time of operation stop, the combusting operation by introducing the combustion air to the burner portion via the regenerator (22) and injecting the fuel gas from the fuel injection nozzle (25) of this burner portion and wherein the combustion air is introduced to the exhaust gas discharge pipe (24) for discharging the combustion exhaust gas.

4. The combustion control method for regenerative-combustion heating furnace according to Claim 1, wherein the heating furnace (10) is provided with plural pairs of regenerative burners (20a,20b) each including the burner portion equipped with the fuel injection nozzle (25) and the regenerator (22) accommodating the heat storage material therein and wherein the combusting and heat storing operations in the respective pairs of regenerative burners are selectively stopped.

## Patentansprüche

1. Verbrennungssteuerverfahren für einen Regenerativ-Verbrennungsheizofen, bei dem ein Heizofen (10) mit zumindest einem Paar regenerativer Brenner (20a, 20b) versehen ist, von denen jeder einen Brennerteil (21) aufweist, der mit einer Brennstoffeinspritzdüse (25) versehen ist, und einen Regenerator (22), der in sich ein Wärmespeichermaterial (22a, 22b) aufweist, und wobei die gepaarten regenerativen Brenner (20a, 20b) geschaltet werden, um zwischen Betrieben in einer solchen Weise zu wechseln, dass ein regenerativer Brenner des Paares einen Verbrennungsvorgang durch Einbringen einer Verbrennungsluft in den Brennerteil über den Regenerator und durch Einspritzen eines Brenngases aus der Brennstoffeinspritzdüse (25) dieses Brennerteils durchführt, während der andere regenerative Brenner einen Vorgang des Einbringens eines Verbrennungsabgases in den Regenerator (22) und des Erlaubens des Wärmespeichermaterials zum Speichern von Wärmen aus dem Verbrennungsabgas vor dem Ableiten des Verbrennungsabgases durch eine Abgasabführleitung (24) durchführt,
wobei in Verbindung mit dem Beenden der Verbrennungs- und Wärmespeichervorgänge in den gepaarten regenerativen Brennern Verbrennungsluft zeitweilig zu dem regenerativen Brenner zugeführt wird, der zum Zeitpunkt des Betriebsendes den Vorgang des Einbringens des Verbrennungsabgases in den Regenerator und des Erlaubens des Wärmespeichermaterials zum Speichern der Wärme aus dem Verbrennungsabgas vor dem Abführen des Verbrennungsabgases durchführt, wodurch Abgas, das in dem Regenerator (22) verbleibt, in den Ofen (10) abgeleitet wird, **dadurch gekennzeichnet, dass**
Verbrennungsluft zum Zeitpunkt des Betriebsendes in die Abgasabführlei-tung (24) eingebracht wird, wodurch Abgas, das in der Abführleitung (24) verbleibt, zur Außenseite des Ofens (10) abgeleitet wird.

2. Verbrennungssteuerverfahren für einen Regenerativ-Verbrennungsheizofen nach Anspruch 1, wobei das Abgas zeitweilig an den regenerativen Brenner (20a, 20b) geliefert wird, der zum Zeitpunkt des Betriebsendes den Betrieb des Einbringens von Verbrennungsgas in den Regenerator (22) und des Erlaubens des Wärmematerials zur Speicherung der Wärme von dem Verbrennungsabgas vor der Ableitung des Verbrennungsabgases durchführt, und wobei der Verbrennungsvorgang durch zeitweiliges Einbringen des Verbrennungsgases von dem Brennerteil dieses regenerativen Brenners (20a, 20b) durchgeführt wird.

3. Verbrennungssteuerverfahren für einen Regenerativ-Verbrennungsheizofen nach Anspruch 1, wobei die Verbrennungsluft auch zeitweilig an den regenerativen Brenner (20a, 20b) zugeführt wird, der zum Zeitpunkt des Betriebsendes den Verbrennungsvorgang durch Einbringen der Verbrennungsluft in den Brennerteil über den Regenerator (22) und des Einbringens des Brennstoffgases aus der Brennstoffeinspritzdüse (25) dieses Brennerteils durchführt und wobei die Verbrennungsluft in die Abgasabführleitung (24) zum Abführen des Verbrennungsabgases eingebracht wird.

4. Verbrennungssteuerverfahren für einen Regenerativ-Verbrennungsheizofen nach Anspruch 1, wobei der Heizofen (10) mit mehreren Paaren von regenerativen Brennern (20a, 20b) ausgestattet ist, von denen jedes den Brennerteil aufweist, der mit der Brennstoffeinspritzdüse (25) ausgestattet ist, und den Regenerator (22), der in sich das Wärmespeichermaterial aufweist, und wobei die Verbrennungs- und Wärmespeichervorgänge in den jeweiligen Paaren der regenerativen Brenner selektiv beendet werden.

## Revendications

1. Procédé de commande de combustion pour un four de chauffage à combustion à régénération dans lequel un four de chauffage (10) est pourvu d'au moins une paire de brûleurs à régénération (20a, 20b) comprenant chacun une partie de brûleur (21) équipée d'une buse d'injection de combustible (25) et un régénérateur (22) recevant un matériau de stockage de chaleur (22a, 22b) dans celui-ci et dans lequel les brûleurs à régénération (20a, 20b) appariés sont commutés pour alterner entre des opérations d'une manière telle qu'un brûleur à régénération de la paire effectue une opération de combustion en introduisant de l'air de combustion dans la partie de brûleur par l'intermédiaire du régénérateur et en injectant un combustible gazeux à partir de la buse d'injection de combustible (25) de cette partie de brûleur tandis que l'autre brûleur à régénération effectue une opération d'introduction d'un gaz d'échappement de combustion dans le régénérateur (22) et qui permet au matériau de stockage de chaleur de stocker la chaleur provenant du gaz d'échappement de combustion avant de décharger le gaz d'échappement de combustion à travers un tuyau de décharge de gaz d'échappement (24),
dans lequel, conjointement avec l'arrêt des opérations de combustion et de stockage de chaleur dans les brûleurs à régénération appariés, de l'air de combustion est temporairement fourni au brûleur à régénération qui effectue, à l'instant de l'arrêt des opérations, l'opération d'introduction du gaz d'échappement de combustion dans le régénérateur et qui permet au matériau de stockage de chaleur de stocker la chaleur provenant du gaz d'échappement de combustion avant de décharger le gaz d'échappement de combustion, moyennant quoi le gaz d'échappement restant dans le régénérateur (22) est déchargé dans le four (10),
**caractérisé en ce que**
de l'air de combustion est introduit, à l'instant de l'arrêt des opérations, dans ledit tuyau de décharge de gaz d'échappement (24), moyennant quoi le gaz d'échappement restant dans le tuyau de décharge (24) est déchargé à l'extérieur du four (10).

2. Procédé de commande de combustion pour un four de chauffage à combustion à régénération selon la revendication 1, dans lequel l'air de combustion est temporairement fourni au brûleur à régénération (20a, 20b) qui effectue, à l'instant de l'arrêt des opérations, l'opération d'introduction du gaz d'échappement de combustion dans le régénérateur (22) et qui permet au matériau de stockage de chaleur de stocker la chaleur provenant du gaz d'échappement de combustion avant de décharger le gaz d'échappement de combustion et dans lequel l'opération de combustion est effectuée en injectant temporairement le combustible gazeux à partir de la partie de brûleur de ce brûleur à régénération (20a, 20b).

3. Procédé de commande de combustion pour un four de chauffage à combustion à régénération selon la revendication 1, dans lequel l'air de combustion est également fourni temporairement au brûleur à régénération (20a, 20b) qui effectue, à l'instant de l'arrêt des opérations, l'opération de combustion en introduisant l'air de combustion dans la partie de brûleur par l'intermédiaire du régénérateur (22) et en injectant le combustible gazeux à partir de la buse d'injection de combustible (25) de cette partie de brûleur et dans lequel l'air de combustion est introduit dans le tuyau de décharge de gaz d'échappement (24) pour décharger le gaz d'échappement de combustion.

4. Procédé de commande de combustion pour un four de chauffage à combustion à régénération selon la revendication 1, dans lequel le four de chauffage (10) est pourvu de plusieurs paires de brûleurs à régénération (20a, 20b) comprenant chacun la partie de brûleur équipée de la buse d'injection de combustible (25) et le régénérateur (22) contenant le matériau de stockage de chaleur dans celui-ci et dans lequel les opérations de combustion et de stockage de chaleur dans les paires respectives de brûleurs à régénération sont arrêtées de manière sélective.
